# EUROPEAN PATENT APPLICATION

(11) **EP 1 722 136 A1**
(43) Date of publication of application: **15.11.2006**
(21) Application number: 05425309.1
(22) Date of filing: 09.05.2005
(51) Int. Cl.: F16K 1/52, G01P 13/00

(54) **Flow regulator device for heating apparatus**

(71) Applicant: Honeywell-Ineco S.r.l., 23848 Oggiono (Lecco) (IT)
(72) Inventor: Meneghello, Gianpaolo, 20157 Milano (IT)
(74) Representative: Provvisionato, Paolo

(57) **Abstract**

A flow regulator device comprises a main body (12) having an internal cavity (13) through which a fluid can pass. The regulator body means (14) are mounted to be movable inside the main body (12) in a main direction (X-X) and comprise a portion (18) elongated in said direction, having a gradually variable cross-section for defining with the internal cavity (13) of the main body a gap for the passage of the fluid, having a cross-section gradually variable in a complementary manner, characterized in that the regulator device further comprises adjusting means (31) comprising at least one stop member (39) selectively movable in the main direction (x-x) for limiting the displacement of the movable body means (14) when they are impinged upon by a fluid passing through the flow regulator device. The device may comprise sensor means for detecting the movement of the regulator body means when they are impinged upon by a flow, and thus function also as a flow sensor.

## Description

The present invention relates to a flow regulator device for apparatus for the heating of fluids, in particular of water for thermal use (ambient heating) and hygiene (running hot water). Devices of this type are normally used in installations comprising a boiler fed for example by gas, for limiting the flow of water, and therefore the maximum flow rate that a user can demand. To maintain the delivery temperature of the water constant, the maximum flow that a user can demand depends on the capacity of the boiler installed.

The solutions of known type normally used provide for the insertion into the water control circuit a maximum flow limiter device substantially designed for the type and capacity of the boiler installed. The use of a boiler of a different type or capacity requires the use of a corresponding different type of flow limiter.

It is an aim of the present invention to provide a maximum flow regulator device for heating apparatus which solves the problems of the prior art, and in particular is simple, economic, easy to construct and of limited overall dimensions. Another aim of the present invention is to produce a flow regulator device which can easily be mounted on existing installations.

In order to achieve the aims indicated above, the subject of the present invention is a flow regulator device having the characteristics indicated in the following claims.

According to a particular form of embodiment, the flow regulator device of the present invention may also perform the function of a flow sensor, capable of indicating, via electrical signals of a sensor, the presence or absence of a flow of fluid, in particular water, which passes through the device as a result of a demand by the user. To this end, the regulator device of the present invention is provided with a magnetic sensor which detects the position of a magnetic armature or pad coupled to the movable body inserted inside the device.

Further characteristics and advantages will become clear from the following detailed description, with reference to the appended drawings, provided purely by way of non-limiting example, in which :

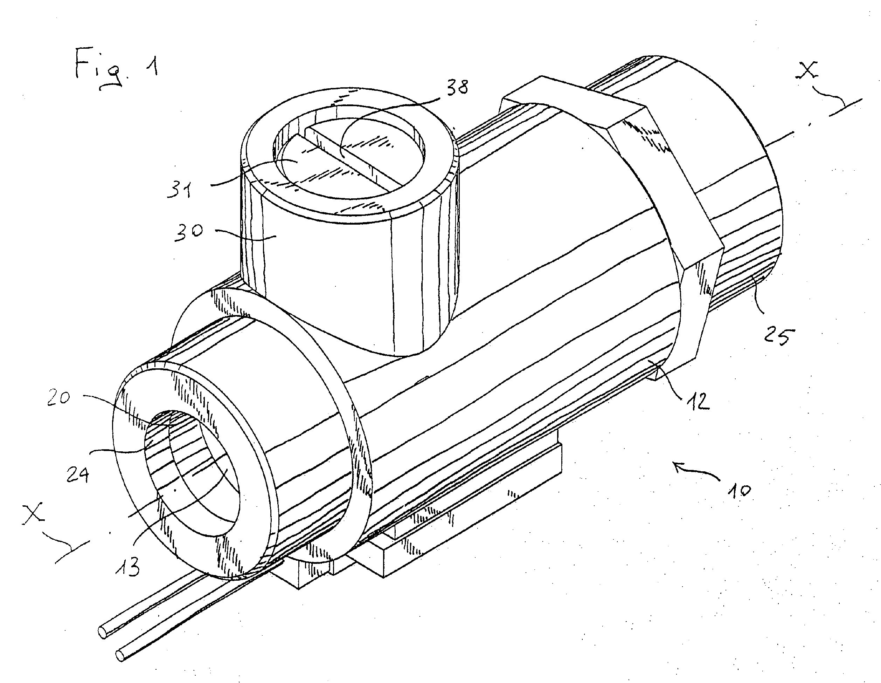

Figure 1 is a perspective view of an exemplary embodiment of the device of the present invention,

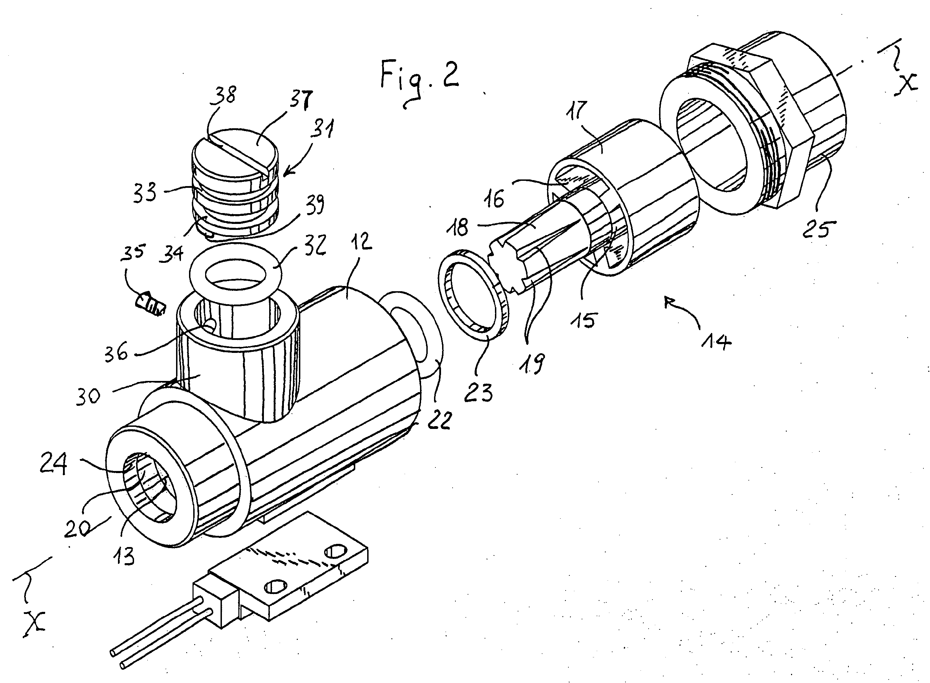

Figure 2 is an exploded view of the device of Figure 1, and
Figure 3 is a longitudinal section through the device of Figure 1.

With reference to the drawings, a flow regulator device 10, in particular for water heating apparatus, comprises a main body 12 having a main cavity 13 which extends axially along a main axis X-X and within which a movable flow regulator body 14 is mounted to be slidable. The flow regulator body 14 comprises a central core 15 from which radially extend spokes 16 connected to a peripheral tubular casing 17, the outside diameter of which corresponds substantially, with clearance, to the inside diameter of the main tubular cavity 13. The central core 15 is extended in an axial direction to form a spigot 18 on the surface of which are preferably provided notches 19 having an overall V-shape in an axial direction, such that the cross-section of the spigot 18 gradually decreases in the direction of its end.

The main tubular cavity 13 of the main body 12 has a narrowing of internal cross-section 20 which forms an abutment 21 against which bears a resilient ring 22 on which, on the opposite side from the abutment 21, bears a rigid annular body 23. The internal cavity of the main body defines an outlet opening 24, on the one hand, while on the other it has a screw thread for the connection of a tubular plug 25 which defines an inlet opening 26 for the fluid passing through the device 10.

From the main body 12 there extends radially a cylindrical seating 30 in which an adjusting body 31 is mounted to be rotatable. A resilient ring or sealing gasket 32 is mounted in an annular groove 33 provided on the adjusting body 31, while in a second annular groove 34 there engages the end of a screw or grub screw 35 screwed into a hole 36 provided in the wall of the cylindrical seating 30. On the head 37 of the adjusting body 31 a notch 38 is provided, while from the other end of the adjusting body 31 there extends eccentrically a protuberance 39 which protrudes inside the main cavity 13 of the main body 12 so as to be able to interfere with the flow regulator body 14, in particular with the edge of its peripheral tubular casing 17.

In the preferred form of embodiment illustrated in the drawings, in which the flow regulator device also functions as a flow sensor, a magnetic armature or pad 40 is fixed inside a cavity 41 provided in the core 15 of the movable body 14, while a magnetic field sensor 42 is fixed to the outside of the main body 12. Naturally, in the case where the flow regulator device is to perform only this function and not also that of flow sensor, both the magnetic armature 40 and the sensor 42 may be eliminated from the assembled device.

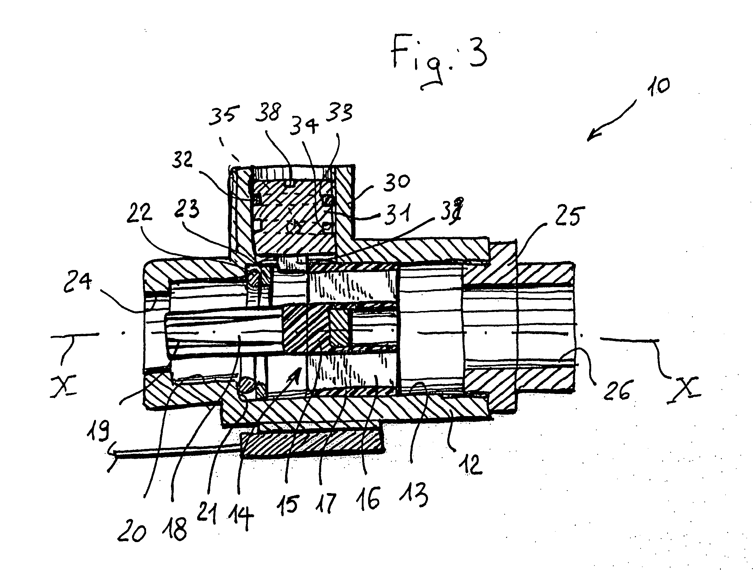

The device described above may be used in installations for heating a fluid, in particular installations for the heating of water for thermal and hygiene use, which comprise a boiler fed for example by gas. The device 10 is inserted into the water control circuit to limit the water pressure demanded by the user. The water entering the inlet opening 26 flows through the movable body 14, in particular through the axial spaces defined by the spokes 16, pushing the movable body in abutment against the protuberance 39 of the adjusting body 31, as can be seen in the section of Figure 3. The water then flows into the gap contained between the rigid annular body 23 and the spigot 18 of the movable body 14, pushing the rigid annular body 23 against the resilient ring 22 which deforms more, the higher the water pressure, that is, the flow demanded by the user. A greater or lesser pressure on the rigid annular body 23 brings about a correspondingly greater or lesser deformation of the resilient ring 22 and a consequent constriction or widening of the gap through which the water can flow towards the outlet opening 24 of the main body 12, with the consequent effect of regulation of the overall flow through the device 10.

The V-shaped notches 19 provided on the spigot 18 of the movable body 14 have substantially the function of increasing or decreasing the cross-section of the gap through which the water passes at the resilient ring 22, depending on the axial position of the movable body 14 itself. Because the V-shaped notches 19 become wider and/or deeper in the direction of the end of the spigot 18, a rearward movement of the movable body 14 towards the entry opening 26 of the device 10, on the right in the drawings, brings about an increase in the cross-section of the aforesaid gap and therefore a greater maximum flow of water let through. On the other hand, a forward movement of the movable body 14 towards the outlet opening 24 of the device 10 brings about a reduction in the cross-section of the aforesaid gap and therefore a lesser maximum flow of water let through. The position, forward or rearward, reached by the movable body 14 impinged upon by a flow of water which passes through the device 10 is determined by the position of the protuberance 39 of the adjusting body 31. By rotating the adjusting body 31 by acting on the notch 38 it is possible to modify the position, along the axis X-X, of the protuberance 39 which is eccentric with respect to the axis of rotation of the adjusting body 31. By means of the screw or grub screw 35, the adjusting body 31 is selectively locked in the desired rotated position.

The device illustrated in the drawings also has the function of a flow sensor. In such a case, it should be mounted with the axis x-x in a vertical direction and with the entry opening 26 arranged downwards, such that in the absence of a flow of water, the movable body moves downwards by gravity. In that position, the magnetic armature 40 is displaced with respect to the sensor 42, which therefore detects a weak magnetic flow, indicating the absence of a flow. When a flow of water passes through the device 10, the movable body is pushed upwards, in the direction of the outlet opening 24, in abutment with the protuberance 39, as illustrated in the drawings. In that position, the magnetic armature 40 reaches its minimum distance from the sensor 42, which therefore detects an increased magnetic flux, thus indicating the presence of a flow.

Naturally, the device described above may be produced with technical variants and modifications, all within the scope of an expert in the field, without thereby departing from the scope of the present invention as defined in the claims. For example, in the case where it is desired to use the device as a flow sensor without the limitation of vertical mounting, a resilient member could be provided, for example a spring, which pushes the movable body 14 rearwards, towards the entry opening 26, in the absence of a flow of water passing through the device 10 itself. On the body of the device, for example at the seating 30, inscriptions or legends or a reference scale may then be provided, as indications of the positions to which the adjusting body is to be set, depending on the type of use, for example on the type of boiler, for which the device of the present invention is intended.

## Claims

1. A flow regulator device comprising a main body (12) having an internal cavity (13) through which a fluid can pass, regulator body means (14) being mounted to be movable inside the main body (12) in a main direction (X-X) and comprising a portion (18) elongated in said direction, having a gradually variable cross-section for defining with the internal cavity (13) of the main body a gap for the passage of the fluid, having a cross-section gradually variable in a complementary manner, **characterized in that** the regulator device further comprises adjusting means (31) comprising at least one stop member (39) selectively movable in the main direction (X-X) for limiting the displacement of the movable body means (14) when they are impinged upon by a fluid passing through the flow regulator device.

2. A flow regulator device according to claim 1, **characterized in that** the adjusting means (31) comprise a member rotatable about an axis substantially transverse to the main direction (X-X), the at least one stop member comprising a protuberance (39) eccentric with respect to said axis and which protrudes into the internal cavity (13) of the main body (12) to interfere with a portion of the movable body means (14).

3. A flow regulator device according to claim 1, **characterized in that** the regulator body means (14) comprise a central core (15) from which extend spokes (16) connected to a tubular peripheral casing (17) mounted to be slidable in the tubular internal cavity (13) of the main body (12).

4. A flow regulator device according to claims 2 and 3, **characterized in that** the protuberance (39) interferes with at least part of the tubular peripheral casing (17) of the regulator body means (14).

5. A flow regulator device according to any one of the preceding claims, **characterized in that** it comprises sensor means (40, 42) for detecting a movement of the regulator body means (14) from a rest position in which they are not impinged upon by a flow, to a stop position defined by the stop member (39) when they are impinged upon by a flow, and vice versa.

6. A flow regulator device according to claim 5, **characterized in that** the sensor means comprise a magnetic sensor (42) which detects the displacement of a permanent magnet (40) mounted on the regulator body means (14).

7. A flow regulator device according to any one of the preceding claims, **characterized in that** it further comprises resilient ring means (22) subjected, in use, to the pressure of the flow and arranged in abutment inside the main body (12) at a narrowing of cross-section of the internal cavity (13) thereof, the resilient ring means (22) contributing to the variation of the gap for the passage of the fluid through the device as a consequence of the fluid pressure exerted on said resilient ring means (22).
